(19) Europäisches Patentamt / European Patent Office / Office européen des brevets

(11) **EP 2 994 971 B1**

(12) **EUROPÄISCHE PATENTSCHRIFT**

(45) Veröffentlichungstag und Bekanntmachung des Hinweises auf die Patenterteilung:
**04.11.2020** **Patentblatt 2020/45**

(51) Int Cl.:
*H02J 3/48* *(2006.01)*     *H02J 3/50* *(2006.01)*
*H02J 3/38* *(2006.01)*     *F03D 7/04* *(2006.01)*

(21) Anmeldenummer: **14722642.7**

(22) Anmeldetag: **05.05.2014**

(86) Internationale Anmeldenummer:
**PCT/EP2014/059099**

(87) Internationale Veröffentlichungsnummer:
**WO 2014/180781 (13.11.2014 Gazette 2014/46)**

(54) **VERFAHREN ZUM EINSPEISEN ELEKTRISCHER LEISTUNG IN EIN ELEKTRISCHES VERSORGUNGSNETZ**

METHOD FOR FEEDING ELECTRICAL POWER INTO AN ELECTRIC SUPPLY NETWORK

PROCÉDÉ D'INJECTION D'UNE PUISSANCE ÉLECTRIQUE DANS UN RÉSEAU DE DISTRIBUTION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.05.2013   DE 102013208474**

(43) Veröffentlichungstag der Anmeldung:
**16.03.2016   Patentblatt 2016/11**

(73) Patentinhaber: **Wobben Properties GmbH**
**26607 Aurich (DE)**

(72) Erfinder: **BUSKER, Kai**
**26629 Großefehn (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A2- 2 175 540     DE-A1-102007 005 852
US-A1- 2010 025 994     US-A1- 2012 101 643

• **MANSOUR MOHSENI ET AL: "Comparing technical connection requirements for large wind power plants", POWER AND ENERGY SOCIETY GENERAL MEETING, 2011 IEEE, IEEE, 24. Juli 2011 (2011-07-24), Seiten 1-8, XP032055114, DOI: 10.1109/PES.2011.6039042 ISBN: 978-1-4577-1000-1**

**Beschreibung**

Die vorliegende Erfindung betrifft ein Verfahren zum Einspeisen elektrischer Leistung in ein elektrisches Versorgungsnetz. Weiterhin betrifft die vorliegende Erfindung eine Windparkanordnung zum Einspeisen elektrischer Leistung in ein elektrisches Versorgungsnetz.

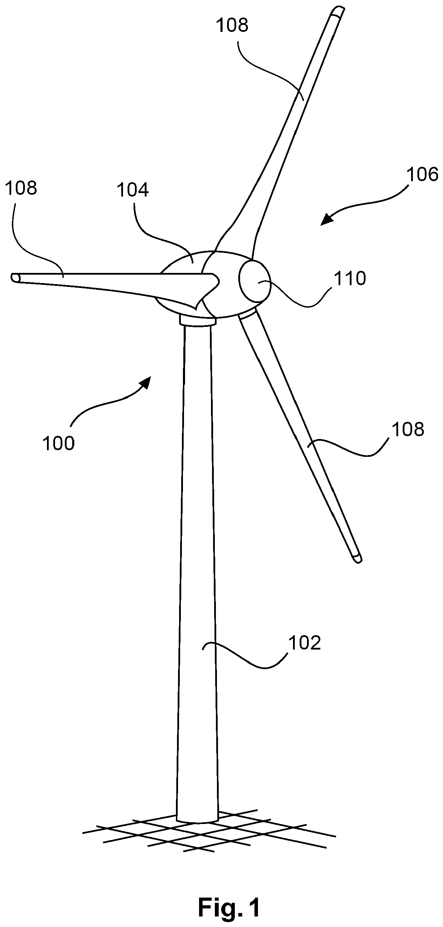

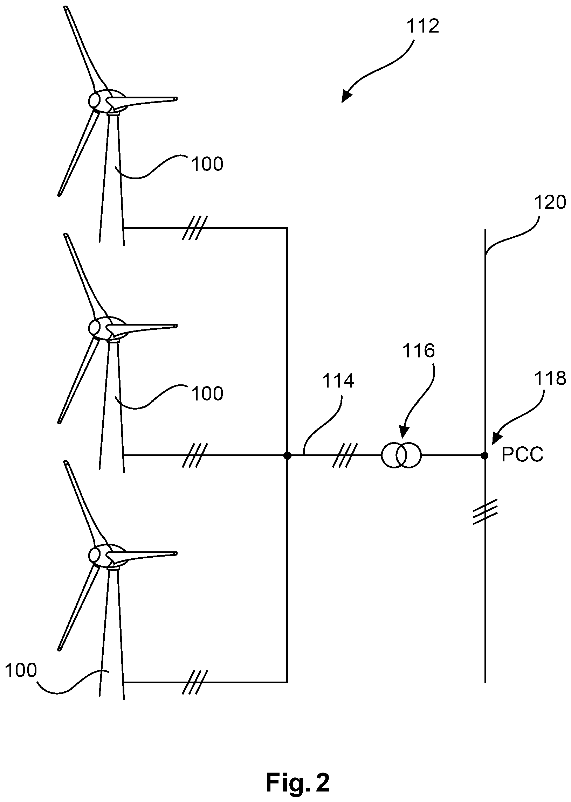

Es ist allgemein bekannt, mittels Windenergieanlagen elektrische Leistung zu erzeugen und in ein elektrisches Versorgungsnetz einzuspeisen. Eine entsprechende Windenergieanlage ist schematisch in Figur 1 gezeigt. Zunehmend werden statt Einzelanlagen zu betreiben, mehrere Windenergieanlagen in einem Windpark aufgestellt, der eine entsprechend große Leistung in das Versorgungsnetz einspeisen kann. Ein solcher Windpark ist schematisch in Figur 2 gezeigt und er zeichnet sich insbesondere durch einen gemeinsamen Netzanschlusspunkt aus, über den alle Windenergieanlagen des Parks in das elektrisches Versorgungsnetz einspeisen.

Solche Windparks können nicht nur viel Leistung in das elektrische Versorgungsnetz einspeisen, sondern sie weisen auch ein entsprechend großes Regelungspotential zum Stabilisieren des elektrischen Versorgungsnetzes auf. Insoweit schlägt bspw. die US-Anmeldung US 7,638,893 vor, dass bspw. der Betreiber des elektrischen Versorgungsnetzes dem Windpark eine Leistungsvorgabe geben kann, um die einzuspeisende Parkleistung zu reduzieren, um dadurch eine weitere Steuerungsmöglichkeit für sein Versorgungsnetz zu haben.

Solche Regelungseingriffe können dabei, je nach Größe des Windparks, schwach sein und können zudem aufgrund der Tatsache schwierig zu handhaben sein, dass Windenergieanlagen und auch Windparks dezentrale Erzeugungseinheiten sind, weil sie vergleichsweise großflächig über ein Gebiet verteilt sind, indem das jeweilige elektrische Versorgungsnetz betrieben wird.

Weiterhin gibt es in manchen Ländern, wie bspw. in Deutschland, Bestrebungen, herkömmliche Großkraftwerke, insbesondere Kernkraftwerke, durch regenerative Energieerzeuger, wie Windenergieanlagen zu ersetzen. Dabei stellt sich aber das Problem, dass mit dem Abschalten und vom Netz nehmen eines Großkraftwerks auch dessen netzstabilisierende Wirkung verloren geht. Die verbleibenden bzw. neu hinzukommenden Energieerzeugungseinheiten werden somit benötigt, diese Änderung der Stabilität zumindest zu berücksichtigen.

Das Dokument US 2012/0101643 A1 betrifft eine Blindleistungssteuerung zum Steuern von Blindleistung eines Windparks. Der Windpark weist dabei wenigstens zwei Unternetze und einen Sammelpunkt auf. Aus dem Dokument US 2010/0025994 A1 ist ein Windenergieanlagensteuersystem bekannt, dass den Ausgang mehrerer eng gekoppelter Windparks steuert, die an einem gemeinsamen Anschlusspunkt mit einem elektrischen Versorgungsnetz verbunden sind. Eine Masterblindleistungssteuerungsvorrichtung verwendet Algorithmen, deren technischer Effekt darin besteht, Wirkleistung, Blindleistung und Spannungsausgang mehrerer Windparks zu koordinieren.

Aufgabe der vorliegenden Erfindung ist es somit, wenigstens eines der genannten Probleme zu adressieren und insbesondere soll eine Lösung geschaffen werden, mittels Windparks eine Stützung eines elektrischen Versorgungsnetzes noch weiter zu erhöhen bzw. zu verbessern, um ein möglichst stabiles Versorgungsnetz schaffen zu können. Zumindest soll eine alternative Lösung vorgeschlagen werden.

Erfindungsgemäß wird somit ein Verfahren gemäß Anspruch 1 vorgeschlagen. Demnach werden wenigstens zwei Windparks zum Einspeisen elektrischer Leistung in ein elektrisches Versorgungsnetz zugrundegelegt. Die hierbei beschriebenen ersten und zweiten Windparks steht dabei repräsentativ für zwei oder mehr Windparks. Die Lehre ist auf einen dritten und weiteren Windpark entsprechend anwendbar. Der dritte bzw. jeder weitere Windpark weist entsprechend die zu dem ersten und zweiten Windpark beschriebenen Einrichtungen, Verbindungen, Ansteuermöglichkeiten und Verhaltensweisen gleichermaßen auf.

Es wird somit wenigstens eine erste elektrische Parkleistung durch den ersten Windpark und eine wenigstens zweite elektrische Parkleistung durch den zweiten Windpark bereitgestellt und beide Parkleistungen sollen letztlich in das Versorgungsnetz eingespeist werden. Aus diesen wenigstens zwei Parkleistungen wird eine Summenleistung erzeugt, nämlich die Summe dieser beiden Parkleistungen und bei der Verwendung von mehr als zwei Windparks wird deren jeweilige Parkleistung entsprechend zu dieser Summenleistung hinzu addiert. Diese Summenleistung wird nun in das elektrische Versorgungsnetz eingespeist.

Weiterhin wird eine Zentralsteuereinheit vorgeschlagen, die zum Steuern der eingespeisten Summenleistung das Bereitstellen der ersten und zweiten Parkleistung steuert. Wird die Summenleistung aus noch weiteren Parkleistungen, also einer dritten und ggf. noch weiteren Parkleistung, erzeugt, ist entsprechend vorgesehen, dass diese Zentralsteuereinheit auch diese Parkleistung steuert, um dadurch die Summenleistung zu steuern, die in das elektrische Versorgungsnetz eingespeist werden soll.

Es wird somit eine zentrale Steuerung einer sehr großen Leistung vorgeschlagen, nämlich einer Leistung, die wenigstens die Leistung zweier Windparks darstellt. Hierdurch kann ein Regelungspotential erhöht werden, weil im Grunde aus Sicht des elektrischen Versorgungsnetzes statt zwei oder mehr kleinerer Leistungen nun eine große Leistung ins Netz eingespeist wird und auch je nach gewünschten Anforderungen gesteuert werden kann.

Das vorgeschlagene Verfahren verringert somit die bei Windenergieanlagen, als auch bei Windparks charakteristische dezentrale Steuerung. Je mehr Windparks auf diese Art und Weise gemeinsam gesteuert werden, ihre einzelnen Parkleistungen also zusammen als eine Summenleistung einspeisen und diese Einspeisung durch die Zentralsteuereinheit koordiniert wird, umso mehr kann es gelingen, die bisherige dezentrale Steuerung in eine zentrale Steuerung umzuwandeln.

Insbesondere wird auch vermieden, dass jeder einzelne Windpark eine eigene Steuerung aufweist und die Steuerungen mehrerer Windparks schlecht aufeinander abgestimmt sind und im ungünstigsten Fall sogar gegeneinander arbeiten.

Die Gefahr, dass zwei in dasselbe Versorgungsnetz einspeisende Windparks gegeneinander arbeiten, kann auch dann vorliegen, wenn beide Windparks dieselbe Steuerung zum Stützen des Versorgungsnetzes implementiert haben. Bspw. können bereits kleine Messungenauigkeiten zu einem unterschiedlichen Stützverhalten bzw. Regelverhalten der beiden beispielhaft genannten Windparks führen. Aber auch minimale Zeitversätze zwischen den beiden Windparks können problematisch sein. Durch solche selbst kleinste Unterschiede kann die Gefahr bestehen, dass der eine Windpark bereits steuernd in das Netz eingreift, bevor der zweite Windpark dazu in der Lage ist.

Bspw. kann das dazu führen, dass eine solche steuernde insbesondere stützende Wirkung des ersten Windparks bereits so erfolgreich ist, dass der zweite Windpark gar nicht erst in einen Bereich kommt, in dem seine steuernde Wirkung einsetzt. Im Ergebnis liegt für dieses Beispiel das Steuerungspotential des zweiten Windparks brach. In ganz extremen Situationen kann es sogar dazu führen, dass der zweite Windpark den Regelungserfolg des ersten Windparks wieder aufzuheben versucht und beide Windparks dann tatsächlich gegeneinander arbeiten. All dies wird durch das vorgeschlagene Verfahren vermieden.

Vorzugsweise umfasst jeder dieser Windparks eine Parksteuereinheit zum Steuern des jeweiligen Windparks. Die Zentralsteuereinheit ist mit diesen Parksteuereinheiten verbunden und die Zentralsteuereinheit steuert das Bereitstellen der ersten und zweiten Parkleistung - und ggf. weitere Parkleistungen sinngemäß - mittels der jeweiligen Parksteuereinheit des jeweiligen Windparks. Insbesondere gibt die Zentralsteuereinheit jeder dieser Parksteuereinheiten entsprechende Steuerbefehle. Außerdem können die jeweiligen Parksteuereinheiten notwendige Informationen an die Zentralsteuereinheit zurückgeben. Dadurch kann die konkrete Parksteuerung durch die einzelnen Parksteuereinheiten vorgenommen werden und die Zentralsteuereinheit kann die Koordination der betreffenden Windparks untereinander über Vorgabewerte steuern, die jeder Windpark dann mit Hilfe seiner Windenergieanlagen entsprechend umsetzt.

Vorzugsweise erfasst die Zentralsteuereinheit hierfür Zustandsgrößen des Versorgungsnetzes, die für diese Koordination benötigt werden. Sie kann aber auch Zustandsgrößen, wie Frequenz, Phase und Spannungsamplitude für die Windparks miterfassen und diesen für deren Bedürfnisse zur Verfügung stellen.

Außerdem oder alternativ erfasst die Zentralsteuereinheit Werte der eingespeisten Summenleistung. Die Zentralsteuereinheit kann somit die von den von ihr gesteuerten Windparks, die vereinfachend als kombinierte Windparks bezeichnet werden, insgesamt eingespeiste Leistung kontrollieren und davon abhängig ggf. entsprechende Steuerungen vornehmen. Außerdem oder alternativ wird vorgeschlagen, dass die Zentralsteuereinheit externe Vorgabewerte erfassen kann, insbesondere bspw. von dem Betreiber des Versorgungsnetzes empfangen kann. Somit kann an zentraler Stelle ein Vorgabewert empfangen und berücksichtigt werden, um darauf basierend die kombinierten Windparks zu koordinieren. Bspw. kann eine maximal einzuspeisende Leistung vorgegeben und mit der eingespeisten Summenleistung verglichen werden. Abhängig von diesem Vergleich kann die Zentralsteuerung die Steuerung der Windparks beeinflussen und ggf. einem Windpark oder mehren Windparks entsprechende Steuersignale geben, um dadurch die jeweilige Parkleistung zu beeinflussen. Dadurch kann dann die Summenleistung beeinflusst und auf den gewünschten Wert gebracht werden.

Gemäß einer Ausführungsform wird vorgeschlagen, dass das Verfahren dadurch gekennzeichnet ist, dass der wenigstens erste und zweite Windpark ihre einzuspeisende Leistung zum Bereitstellen auf ein Zwischennetz einspeisen, wobei

- das Zwischennetz jeweils über einen Transformator mit dem jeweiligen Windpark verbunden ist, zum Hochtransformieren einer elektrischen Spannung im Windpark auf eine höhere elektrische Spannung im Zwischennetz und/oder
- das Zwischennetz über einen Transformator mit dem elektrischen Versorgungsnetz verbunden ist, zum Hochtransformieren einer elektrischen Spannung im Zwischennetz auf eine höhere elektrische Spannung im Versorgungsetz.

Somit wird ein Zwischennetz vorgeschlagen, dass die beiden Windparks, bzw. weitere durch das Verfahren gesteuerte Windparks, verbindet, um im Grunde die Parkleistungen auf dem Zwischennetz zu sammeln und auch hier die Summenleistung zu bilden, um dann von dem Zwischennetz auf das elektrische Versorgungsnetz einzuspeisen. Eine Hochtransformation der Parkspannungen, also der Spannung des jeweiligen Parks, kann durch einen Transformator für jeden Park vorgenommen werden. Es wird somit die Spannung jedes Parks hochtransformiert, bevor sie in das Zwischennetz gegeben wird. Außerdem oder alternativ ist ein Transformator vorgesehen, um die Spannung im Zwischennetz auf die Spannung im Versorgungsnetz hoch zu transformieren. Es kann auch vorgesehen sein, dass die jeweilige Parkspannung auf eine höhere Spannung im Zwischennetz hochtransformiert wird und außerdem noch diese höhere Spannung des Zwischennetzes weiter hochtransformiert wird auf eine noch höhere Spannung im Versorgungsnetz. Vorzugsweise weist das Zwischennetz eine Mittelspannung auf, nämlich im Bereich von 1 bis 50kV und das elektrische Versorgungsnetz eine Hochspannung auf, nämlich mit einem Spannungswert von etwa 110kV.

Vorzugsweise erfasst die Zentralsteuereinheit die in das Versorgungsnetz eingespeiste Summenleistung in dem Bereich bzw. an einem Anschlusspunkt, an dem von dem Zwischennetz in das Versorgungsnetz eingespeist wird. Das wird in vorteilhafter Weise im Bereich des Transformators zwischen dem Zwischennetz und dem Versorgungsnetz oder dort vor dem Transformator realisiert.

Eine weitere Ausgestaltung der Erfindung schlägt vor, dass die Zentralsteuereinheit das Einspeisen in das elektrische Versorgungsnetz in Abhängigkeit wenigstens einer Zustandsgröße im Versorgungsnetz steuert, das Einspeisen in Abhängigkeit einer Netzsensitivität des Versorgungsnetzes bezogen auf den Einspeiseknoten steuert und dass sie außerdem oder alternativ das Einspeisen in Abhängigkeit eines Kurzschlussstromverhältnisses steuert.

Als Zustandsgröße kommt hier insbesondere die Netzfrequenz f, eine Änderung der Netzfrequenz $\partial f/\partial t$ und die Netzspannung U in Betracht. Insbesondere sorgt die Zentralsteuereinheit für das Einspeisen einer Summenleistung in das Versorgungsnetz gemäß einer Vorgabe, die bspw. von dem Betreiber des Versorgungsnetzes vorgegeben worden sein kann. Darüber hinaus, nämlich zusätzlich, kann eine Steuerung der Einspeisung in Abhängigkeit einer Zustandsgröße vorgesehen sein, um dadurch dynamisch auf Vorgänge im Versorgungsnetz reagieren zu können. Bspw. kann vorgesehen sein, bei einer Erhöhung der Netzfrequenz f über einen Schwellwert hinaus, der über dem nominalen Wert liegt, die eingespeiste Summenleistung zu verringern. Es wird somit vorgeschlagen, eine solche dynamische Regelung zur dynamischen Stabilisierung bzw. Stützung des Versorgungsnetzes zentral vorzusehen, nämlich mittels der Zentralsteuereinheit. Die Durchführung kann so erfolgen, dass die Zentralsteuereinheit entsprechende Steuerwerte oder Steuerbefehle an die Parksteuereinheiten weitergibt. Die Parksteuereinheiten können ihrerseits dazu umgerechnete Werte an die einzelnen Windenergieanlagen in dem betreffenden Park weitergeben.

Im Ergebnis wirken diese zwei Windparks als eine Einheit auf das Versorgungsnetz, die dabei über ein sehr hohes Steuerpotential verfügt, nämlich über die Leistung der wenigstens beiden Windparks zusammen. Ein gegeneinander Arbeiten der einzelnen so verknüpften Windparks oder gar einzelner Windenergieanlagen in den Windpark wird vermieden. Im Übrigen vereinfacht dieses Verfahren auch die Steuerung für den Betreiber des Versorgungsnetzes, weil der hierfür nur dieser einen Zentralsteuereinheit einen Sollwert oder andere gewünschte Werte zu übergeben braucht. Hierdurch wird gleichwohl eine Vorgabe für eine Einheit mit einer sehr großen verfügbaren Leitung getätigt.

Die genannten Parkleistungen und die genannte Summenleistung beziehen sich grundsätzlich auf Wirkleistung. Vorzugsweise wird dennoch als eine Alternative vorgeschlagen, die für diese Leistungen, also Wirkleistungen, beschriebenen Verfahrensmerkmale sinngemäß für eine Blindleistungssteuerung einzusetzen. Die Zentralsteuereinheit kann hierbei den einzelnen Windpark eine gewünschte Blindleistungseinspeisung vorgeben, um dadurch eine gewünschte Summenblindleistungseinspeisung, also die Einspeisung einer Summenblindleistung realisieren zu können. Eine solche Blindleistungseinspeisung kommt insbesondere in Abhängigkeit der Spannung U des Versorgungsnetzes in Betracht. Es wird gemäß einer Ausführungsform hierzu vorgeschlagen, dass die Steuereinheit eine ansteigende Blindleistungseinspeisung mit fallender Netzspannung vornimmt, wenn die Netzspannung unter einen Schwellwert unterhalb der Nennspannung fällt, um nur ein Beispiel zu nennen.

Auch für eine solche Blindleistungssteuerung mittels der Zentralsteuereinheit liegt ein großes Steuerpotential vor, weil das Steuerpotential aller kombinierten Windparks, also wenigstens der beispielshaft genannten zwei Windparks der Zentralsteuereinheit zusammen zur Verfügung steht. Sofern ein solcher Netzzustand, wie die beispielhaft genannte Netzspannung, aber ihren Nominalwert aufweist oder zumindest nur innerhalb eines Toleranzbereichs davon abweicht, kann eine solche Blindleistungssteuerung vorsehen, dass keine Blindleistung eingespeist wird.

Eine weitere Größe zum Verbessern einer Netzstützung ist die Betrachtung der Netzsensitivität. Eine solche Netzsensitivität kann Aufschluss über die momentane Stärke bzw. Stabilität des Versorgungsnetzes geben, insbesondere bezogen auf den Einspeisepunkt für die Summenleistung. Die Netzsensitivität kann dabei unmittelbar auf eine solche Leistungssteuerung eingreifen, vorzugsweise wird aber vorgeschlagen, dass ein Regelalgorithmus abhängig von der Netzsensitivität ausgewählt, eingestellt und/oder verändert wird, der Regelalgorithmus als solcher aber andere Eingangsgrößen haben kann. Insbesondere kann hierdurch Qualität und Dynamik der Netzsteuerung an die aktuellen Bedürfnisse des Versorgungsnetzes, das vereinfachend auch nur als Netz bezeichnet wird, angepasst werden.

Hierbei wird unter einer Netzsensitivität die Reaktion des Netzes, insbesondere bezogen auf den gemeinsamen Netzanschlusspunkt, auf eine Änderung einer Größe verstanden, die auf das Netz wirkt. Die Netzsensitivität kann als Differenz einer Netzreaktion im Bezug auf eine Differenz einer Netzeinflussgröße definiert werden. Insbesondere kommt im vorliegenden Fall eine Definition im Bezug auf eingespeiste Wirkleistung und Höhe der Netzspannung in Betracht. Vereinfacht kann beispielsweise für die Netzsensitivität NS die folgende Formel definiert werden:

$$NS = \frac{\Delta U}{\Delta P}$$

Hierbei bezeichnet $\Delta P$ die Änderung der eingespeisten Wirkleistung, nämlich der eingespeisten Summenleistung und $\Delta U$ die resultierende Änderung der Netzspannung U. Diese Differenzen werden über einen sehr kurzen Zeitraum gebildet, insbesondere im Bereich von einer Sekunde oder darunter und vorteilhafterweise kann auch statt dieser anschaulichen Formel über die Differenz der Spannung im Bezug auf die Differenz der Leistung entsprechend eine partielle Ableitung der Netzspannung U, nämlich insbesondere ihr Effektivwert, nach der eingespeisten Parkleistung P gebildet werden. Es kommt als Netzreaktion auch die Änderung der Netzfrequenz f in Betracht. Eine weitere Möglichkeit der Berücksichtigung der Netzsensitivität wäre über die Formel:

$$NS = \frac{\Delta f}{\Delta P}$$

Vorzugsweise wird weiter vorgeschlagen, ein Kurzschlussstromverhältnis zu berücksichtigen und abhängig davon mittels der Zentralsteuereinheit das Einspeisen zu steuern. Auch hierfür wird insbesondere vorgeschlagen, dass ein Steueralgorithmus abhängig von dem Kurzschlussstromverhältnis ausgewählt, eingestellt und/oder verändert wird.

Das Kurzschlussstromverhältnis, das auch als SCR (Short Circuit Ratio) bezeichnet wird, bezeichnet das Verhältnis der Kurzschlussleistung zur Anschlussleistung. Hierbei wird unter Kurschlussleistung diejenige Leistung verstanden, die das betreffende Versorgungsnetz an dem betrachteten Netzanschlusspunkt, an dem die Windenergieanlage, der Windpark bzw. die vorgeschlagenen kombinierten Windparks angeschlossen ist/sind, bereitstellen kann, wenn an diesem Netzanschlusspunkt ein Kurzschluss auftritt. Die Anschlussleistung ist die Anschlussleistung der angeschlossenen Windenergieanlage, des angeschlossenen Windparks bzw. der vorgeschlagenen kombinierten Windparks und damit insbesondere die Nennleistung des anzuschließenden Generators bzw. die Summe aller Nennleistungen der Generatoren des oder der Windparks. Das Kurzschlussstromverhältnis ist somit ein Kriterium zur Stärke des elektrischen Versorgungsnetzes in Bezug auf diesen betrachteten Netzanschlusspunkt. Ein auf diesen Netzanschlusspunkt bezogenes starkes elektrisches Versorgungsnetz weist meist ein großes Kurzschlussstromverhältnis von bspw. SCR = 10 oder größer auf.

Es wurde erkannt, dass das Kurzschlussstromverhältnis auch eine Information über das Verhalten des betreffenden Versorgungsnetzes am Netzanschlusspunkt gegeben kann. Dabei kann das Kurzschlussstromverhältnis auch variieren.

Vorteilhaft ist es, bei der Neuinstallation kombinierter Windparks das Kurzschlussstromverhältnis zu berücksichtigen und die Wirkleistungssteuerung und die Blindleistungssteuerung daran anzupassen. Es wird vorzugsweise weiter vorgeschlagen, das Kurzschlussstromverhältnis auch nach der Installation und Inbetriebnahme der kombinierten Windparks in regelmäßigen Abständen zu erfassen. Die Erfassung der Kurzschlussleistung kann bspw. über Informationen über die Netztopologie mit Hilfe einer Simulation erfolgen. Die Anschlussleistung kann einfach über die Kenntnis der installierten Windenergieanlagen in den kombinierten Windparks erfolgen und/oder sie kann über die Messung der eingespeisten, ungedrosselten Summenleistung bei Nennwind erfolgen.

Vorzugsweise wird eine Anschlussleistung zur vorgeschlagenen Berechnung und Berücksichtigung des Kurzschlussstromverhältnisses als Summe der Nennleistung aller jeweils aktuell verfügbaren Windenergieanlagen definiert und berechnet. Die Anschlussleistung würde sich in diesem Sinne somit bereits schon bei Ausfall einer Windenergieanlage ändern, zumindest vorübergehend ändern. Damit würde sich auch das Kurzschlussstromverhältnis ändern und hierüber könnte eine Änderung der Wirkleistungssteuerung und/oder der Blindleistungssteuerung ausgelöst werden.

Eine Ausgestaltung schlägt vor, dass die Zentralsteuerung für das Einspeisen in das elektrische Versorgungsnetz

- die Höhe der einzuspeisenden Wirkleistung steuert,
- die Höhe der einzuspeisenden Blindleistung steuert und/oder
- das Verbrauchen elektrischer Leistung in einer Verbrauchseinrichtung, insbesondere in einer Verlustwiderstandseinrichtung steuert.

Die Zentralsteuereinheit kann somit die Höhe der einzuspeisenden Wirkleistung steuern und außerdem oder alternativ die Höhe der einzuspeisenden Blindleistung, wie oben im Zusammenhang mit diversen Ausführungsformen beschrieben wurde. Weiterhin kann das Verfahren vorsehen, das Verbrauchen elektrischer Leistung in einer Verbrauchseinrichtung zu steuern. Insbesondere kommt hier ein Verbrauch elektrischer Leistung in einer Verlustwiderstandseinrichtung in Betracht. Hierzu kann eine solche Verbrauchseinrichtung in einem, mehren oder allen koordinierten Windparks vorgesehen sein. Vorzugsweise wird eine solche Verbrauchseinrichtung aber außerhalb der Windparks, die auch vereinfachend als Parks bezeichnet werden können, angeordnet und ist unmittelbar durch die Zentralsteuereinheit steuerbar.

Insbesondere wenn ein Zwischennetz vorgesehen ist, sind die Windparks an dieses Zwischennetz gekoppelt und es ist die wenigstens eine Verbrauchseinrichtung an dieses Zwischennetz gekoppelt. Das gezielte Verbrauchen elektrischer Leistung kann vorgesehen sein, um temporär eine Überleistung eines, mehrerer oder aller koordinierter Windparks zu verbrauchen, wenn bspw. die einzuspeisende Leistung schlagartig reduziert werden soll und die Windenergieanlagen der Windparks die Entnahme der Leistung aus dem Wind nicht schnell genug reduzieren können.

Außerdem oder alternativ wird vorgeschlagen, dass eine solche Verbrauchseinrichtung auch gezielt die Möglichkeit schafft, Leistung aus dem Versorgungsnetz abzunehmen, falls dort ein Überangebot vorherrschen sollte und die dieses Überangebot einspeisenden Kraftwerke ihre Einspeiseleistung nicht schnell reduzieren können.

Ist diese wenigstens eine Verbrauchseinrichtung an dem Zwischennetz unmittelbar angeschlossen, kann sie gleichwohl den Windparks zur Verfügung stehen. Außerdem kann sie überschüssige Leistung aus dem Versorgungsnetz aufnehmen, ohne dass die Windparks davon beeinflusst werden.

Vorzugsweise wird als Verbrauchseinrichtung eine Einrichtung vorgeschlagen, die die zu verbrauchende Leistung möglichst sinnvoll verwendet. Die Einrichtung kann dazu Arbeit verrichten oder insbesondere die überschüssige Leistung zwischenspeichern und dazu ggf. in eine andere Energieform zur besseren Speicherung wandeln. Vorzugsweise ist diese Verbrauchseinrichtung also ein bidirektionaler Energiewandler und/oder ein Energiespeicher.

Eine bevorzugte Ausgestaltung schlägt vor, dass

- die Zentralsteuereinheit aktuelle Zustandsgrößen im elektrischen Versorgungsnetz erfasst, insbesondere Frequenz und Spannungsamplitude, und davon abhängig das Bereitstellen wenigstens der ersten und zweiten Parkleistung steuert und/oder
- jede Parksteuereinheit Informationen über wenigstens eine Zustandsgröße des jeweiligen Windparks bereitstellt und die Informationen enthalten wenigstens

  - die aktuell verfügbare Leistung,
  - die innerhalb eines vorbestimmten Vorhersagezeitraums zu erwartende verfügbare Leistung und
  - zu erwartende Änderungen der verfügbaren Leistung.

Die Zentralsteuereinheit wird somit auch als Messeinheit verwendet, um insbesondere Frequenz- und Spannungsamplitude der Spannung im Versorgungsnetz zu erfassen. Diese Größen können verwendet werden, um abhängig davon das Bereitstellen der ersten und zweiten und ggf. weiterer Parkleistung zu steuern. Auch die im Zusammenhang mit einer Ausführungsform beschriebenen Spannungsänderung $\partial f/\partial t$ kann aus dieser erfassten Frequenz der Spannung des Versorgungsnetzes ermittelt werden. Diese Informationen können auch den koordinierten Windparks, insbesondere deren Parksteuereinheiten zur Verwendung zur Verfügung gestellt werden.

Außerdem oder alternativ stellt jede Parksteuereinheit der Zentralsteuereinheit Informationen über den aktuellen Zustand des Windparks bereit, also Zustandsgrößen des jeweiligen Windparks, nämlich insbesondere der aktuell verfügbare Leistung, demnächst zu erwartende verfügbare Leistung und zu erwartende Änderungen der verfügbaren Leistung. Diese Informationen über die Leistung kann die Zentralsteuereinheit entsprechend auswerten und im Lichte solcher Informationen aller koordinierten Windparks entsprechend zusammenführen. Informationen über zu erwartende Leistungen und zu erwartende Änderungen der Leistung können in dem jeweiligen Windpark insbesondere über Windprognosen ermittelt werden. Dies kann in einem Fall eine meteorologische Auswertung sein. In anderen Fällen kann, insbesondere dann, wenn der Windpark über eine vergleichsweise große Fläche verteilt ist, die Zunahme oder Abnahme des Windes an einigen luvseitigen Windenergieanlagen erfasst werden. Daraus kann der Park, der all diese Windenergieanlagen steuert und überwacht, eine Prognose für die dahinterstehenden Windenergieanlagen ableiten und daraus kann dann eine Leistungsprognose abgeleitet und der Zentralsteuereinheit rechtzeitig zur Verfügung gestellt werden. Ggf. kann darauf basierend oder basierend auf anderen Informationen die Zentralsteuereinheit dem Betreiber des Versorgungsnetzes eine entsprechende Information weitergeben.

Vorzugsweise ist die Zentralsteuereinheit dazu vorbereitet, als Phasenschieber zu arbeiten. Die Zentralsteuereinheit nimmt hierbei Leistung aus dem Versorgungsnetz auf und speist sie als Einspeisestrom mit verändertem bzw. wie gewünscht eingestelltem Phasenwinkel in das elektrische Versorgungsnetz ein. Diese Funktion kann eine solche Zentralsteuereinheit selbst dann ausführen, wenn die Windparks gar keine Leistung liefern, weil bspw. Flaute herrscht. Vorzugsweise ist die Zentralsteuereinheit aber dazu vorbereitet, einen solchen Phasenschieberbetrieb gleichzeitig mit dem Einspeisen der Summenleistung vorzunehmen. Die Möglichkeit der Netzstützung kann durch diesen kombinierten Betrieb durch die Zentralsteuereinheit erhöht werden.

Vorzugsweise wird das Einspeisen in das Netz so ausgeführt, dass Störungen im Versorgungsnetz ganz oder teilweise kompensiert werden. Dazu erfasst die Zentralsteuereinheit Störungen, wie bspw. Oberwellen, und speist kompensierend ein. Es wird also in diesem Fall gezielt ein nicht idealer, also nicht sinusförmiger Strom, eingespeist, der aber von dem idealen sinusförmigen Verlauf derart abweicht, dass diese Abweichungen, die ihrerseits im Grunde selbst Störungen darstellen, die im Netz vorhandenen Störungen möglichst kompensieren, zumindest vermindern.

Außerdem wird eine Windparkanordnung gemäß Anspruch 9 vorgeschlagen. Diese ist zum Einspeisen elektrischer Leistung in ein elektrisches Versorgungsnetz vorbereitet und umfasst wenigstens einen ersten und einen zweiten jeweils mehrere Windenergieanlagen umfassenden Windpark. Weiterhin umfasst sie ein mit den Windparks verbundenes elektrischen Zwischennetz zum Weiterleiten elektrischer Parkleistung, die von dem jeweiligen Windpark bereitgestellt wird. Die Windparks sind also zum Einspeisen auf dieses Zwischennetz vorbereitet. Weiterhin umfasst diese Windparkanordnung eine Zentralsteuereinheit, die das Einspeisen einer Summenleistung steuert. Diese Summenleistung setzt sich aus den Parkleistungen zusammen, die auf das Zwischennetz eingespeist wurden bzw. über das Zwischennetz bereitgestellt wurden und die Zentralsteuereinheit ist dazu vorbereitet, diese bereitgestellten Parkleistungen zu steuern. Insbesondere ist die Zentralsteuereinheit über eine Datenverbindung mit den einzelnen Parks, insbesondere mit jeweils einer Parksteuereinheit jedes Parks vernetzt. Dies kann kabelgebunden oder kabellos vorgesehen sein.

Insbesondere ist vorgesehen, dass die Windparkanordnung dazu ausgebildet ist, wenigstens ein Verfahren gemäß einer der oben beschriebenen Ausführungsformen auszuführen.

Dazu sind entsprechende Steuerfunktionen, insbesondere Steuerprogramme, in der Zentralsteuereinheit zu implementieren und es werden entsprechende Kommunikationskanäle zwischen der Zentralsteuereinheit und den Parksteuereinheiten benötigt. Je nach Ausführungsform des einzusetzenden Verfahrens können weitere Elemente, insbesondere Sensoren und/oder ein Frequenzwechselrichter und/oder eine Phasenschiebereinrichtung, vorgesehen sein.

Weiterhin wird vorgeschlagen, dass das Zwischennetz jeweils über einen Transformator mit dem Windpark verbunden ist, zum Hochtransformieren einer elektrischen Spannung im Windpark auf eine höhere elektrische Spannung im Zwischennetz und dass außerdem oder alternativ vorgesehen ist, dass das Zwischennetz über einen Transformator mit dem elektrischen Versorgungsnetz verbunden ist, um eine elektrische Spannung im Zwischennetz auf eine höhere elektrische Spannung im Versorgungsnetz hoch zu transformieren. Somit wird vorgeschlagen, dass eine Windenergieanlageanordnung solche Spannungshochtransformationen zwischen Windpark und Zwischennetz und/oder Zwischennetz und Versorgungsnetz vornehmen kann, wie im Zusammenhang mit einigen Ausführungsformen des vorgeschlagenen Verfahrens beschrieben wurde.

Vorzugsweise wird sowohl für die Windparkanordnung als auch das zum Einspeisen einzusetzende Verfahren vorgeschlagen, von extern, insbesondere einem Betreiber des Versorgungsnetzes an die Zentralsteuereinheit ein gewünschter Spannungssollwert als Referenzwert für die Spannung des Versorgungsnetzes gegeben wird. Außerdem oder alternativ vorgeschlagen, dass ein maximaler Leistungswert und/oder ein gewünschter Leistungswert der Zentralsteuereinheit vorgegeben wird. Weiterhin wird als eine Ausführungsform vorgeschlagen, dass eine gewünschte Reserveleistung der Zentralsteuereinheit als Vorgabewert übermittelt wird. Eine solche Reserveleistung ist diejenige Leistung, um die die Summenleistung, die eingespeist wird, unter der aktuell möglichen einzuspeisenden Summenleistung liegt. Hierzu kann der Zentralsteuereinheit bspw. eine prozentuale oder absolute Angabe für die Reserveleistung übergeben werden.

Vorzugsweise übermittelt die Zentralsteuereinheit an die Parksteuereinheiten einen Wert für eine einzuspeisende Blindleistung als Blindleistungssollwert, einen Wirkleistungsoberwert als Leistungswert den der betreffende Park aktuell nicht überschreiten soll, und außerdem oder alternativ wird vorgeschlagen, dass die Zentralsteuereinheit eine Leistungsreserve, die auch als Vorhalteleistung bezeichnet wird, der Parksteuereinheit als Sollwert übermittelt. Die einzelnen Parks und damit insgesamt die Summenleistung können somit unter einem aktuell möglichen Leistungswert betrieben werden. Diese Vorhalteleistung steht somit als potentielle positive Regelleistung zur Verfügung, also als Leistung die zusätzlich bei Bedarf eingespeist werden kann.

Gemäß einer weiteren Ausführungsform wird vorgeschlagen, dass jede Parksteuereinheit und/oder jede Windenergieanlage der Parks jeweils eigenständig eine netzzustandsabhängige Steuerung vorsehen kann, insbesondere eine frequenzabhängige Leistungssteuerung vorsehen kann, wenn nämlich die Zentralsteuereinheit bzw. eine entsprechende Parksteuereinheit ausfällt. Soweit hier lediglich Elemente der Informationsverarbeitung ausgefallen sind, die physikalische Anbindung bis zum Versorgungsnetz aber nachwievor vorhanden ist, kann in soweit eine Einspeisung fortgesetzt werden und sogar eine dynamische Netzstützung bzw. Netzstabilisierung durchgeführt werden.

Somit wurden basierend auf der vorliegenden Erfindung viele Ausführungsformen sowohl für ein Verfahren als auch für eine Windparkanordnung beschrieben, die u.a. auch die Möglichkeit vorsehen, dass mehrere Windparks koordiniert in das elektrische Versorgungsnetz einspeisen und dadurch sich wie ein Großkraftwerk am Netzverhalten könnten. Rein vorsorglich wird darauf hingewiesen, dass auch eine zentrale Steuerung dann vorteilhafte Wirkung entfalten kann, nämlich solche wie oben beschrieben, wenn physikalisch aber mehrere Einspeisepunkte zum Einspeisen in das elektrische Versorgungsnetz vorgesehen sind, solange aber die Einspeisung zentral und insbesondere gleich gesteuert wird. Vorzugsweise wird aber die gesamte Summenleistung an einem Netzanschlusspunkt in das elektrische Versorgungsnetz eingespeist.

Nachfolgend wird die Erfindung anhand von Ausführungsformen beispielhaft unter Bezugnahme auf die begleitenden Figuren erläutert.

Figur 1     zeigt schematisch eine Windenergieanlage.

Figur 2     zeigt schematisch einen Windpark.

Figur 3    zeigt eine Windparkanordnung schematisch.

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

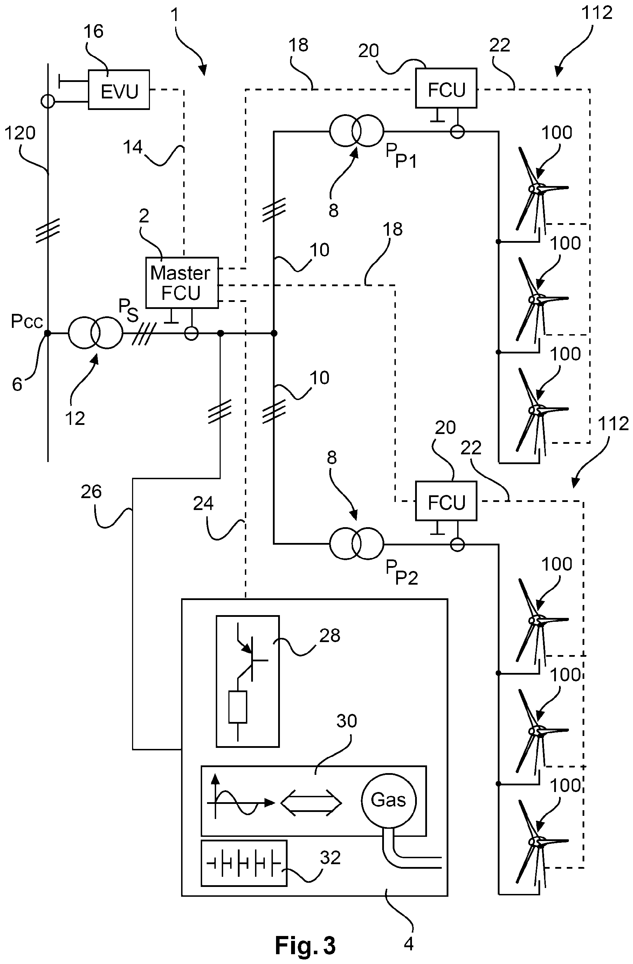

Figur 3 zeigt eine Windparkanordnung 1 mit exemplarisch zwei Windparks 112, die auch unterschiedlich ausgebildet sein können, einer Zentralsteuereinheit 2 und einer Verbrauchseinrichtung 4. Die Windparkanordnung 1 ist dabei an dem gemeinsamen Netzanschlusspunkt 6 an das elektrische Versorgungsnetz 120, das hier nur angedeutet ist, angeschlossen.

Figur 3 zeigt für die Parkanordnung 1 beispielhaft zwei Windparks 112, die mehrere Windenergieanlagen 100 aufweisen. Die Windenergieanlagen 100 jedes Windparks 112 erzeugen jeweils eine Parkleistung $P_{P1}$ bzw. $P_{P2}$ die über einen Parktransformator 8 einem Zwischennetz 10 jeweils bereitgestellt wird und als Summenleistung $P_S$ zum Einspeisen in das Versorgungsnetz 120 bereitsteht. Unter der zunächst vereinfachenden Annahme, dass die Verbrauchseinrichtung 4 nicht aktiv ist, ist die Summenleistung $P_S$ die Summe der Parkleistung $P_{P1}$ und $P_{P2}$ und genügt somit der Gleichung $P_S = P_{P1} + P_{P2}$.

Diese Summenleistung $P_S$ wird entsprechend über den Einspeisetransformator 12 am Netzanschlusspunkt 6 in das Versorgungnetz 120 eingespeist.

Die Zentralsteuereinheit ist hier im Bereich des Netzanschlusspunktes 6 vor dem Einspeisetransformator 12 angeordnet. Dort kann die Zentralsteuereinheit auch die eingespeiste Leistung $P_S$ erfassen.

Die Zentralsteuereinheit 2 ist dabei über eine EVU-Datenverbindung 14 mit einer Steuereinheit 16 des Betreibers des elektrischen Versorgungsnetzes 120 verbunden. Über diese EVU-Datenverbindung 14 kann die Zentralsteuereinheit 2 Daten der Steuereinheit 16 des Netzbetreibers empfangen, wie bspw. einen Wert für die einzuspeisende Summenleistung $P_S$, und Daten übertragen, wie bspw. Informationen zu der aktuell verfügbaren Summenleistung $P_S$. Überhaupt sind in der Figur 3 sämtliche Datenverbindungen als gestrichelte Linie gezeichnet.

Die Zentralsteuereinheit ist über Parksteuerverbindungen 18 jeweils mit einer Parksteuereinheit 20 des betreffenden Windparks 112 verbunden. Über diese Parksteuerverbindungen 18 kann die Zentralsteuereinheit 2 der jeweiligen Parksteuereinheit 20 Daten übermitteln, insbesondere Sollwerte für die einzuspeisende Parkleistung $P_{P1}$ bzw. $P_{P2}$. Es wird darauf hingewiesen, dass die Bezugszeichen beider Windparks 112, bis auf die Parkleistung $P_{P1}$ bzw. $P_{P2}$, identisch gewählt sind, um die Analogien zwischen den beiden Parks zu verdeutlichen. Die einzelnen Elemente, wie bspw. der Parktransformator 8, können aber unterschiedlich ausgestaltet sein.

Über die Parksteuerverbindung 18 können aber auch andere Kommunikationen zwischen der Zentralsteuereinheit 2 und der jeweiligen Parksteuereinheit 20 vorgenommen werden. Dabei kann bspw. die Parksteuereinheit 20 der Zentralsteuereinheit 2 Informationen über die derzeit verfügbare Parkleistung geben.

Jede Parksteuereinheit 20 ist wiederum innerhalb ihres Parks 112 über ein Parkdatennetz 22 zum Datenaustausch mit den jeweiligen Windenergieanlagen 100 verbunden. Dadurch kann die Parksteuereinheit 20 die jeweiligen Vorgabewerte, die sie von der Zentralsteuereinheit 2 erhalten hat, zur Steuerung des Parks 112 an die Windenergieanlagen 100 weitergeben. Außerdem kann die Parksteuereinheit 20 darüber Informationen von den Windenergieanlagen 100 empfangen und diese ggf. auswerten und falls gewünscht an die Zentralsteuereinheit 2 weitergeben.

Somit kann die Zentralsteuereinheit 2 das Einspeisen der Summenleistung $P_S$ dadurch steuern, dass sie die einzelnen Parkleistungen $P_{P1}$ und $P_{P2}$ über die Steuerung der Parksteuereinheiten 20 steuert.

Weiterhin ist die Verbrauchseinrichtung 4 über eine Verbrauchssteuerverbindung 24 mit der Verbrauchseinrichtung 4 verbunden. Hierüber kann die Zentralsteuereinheit insbesondere steuern, wenn überschüssige Leistung mittels der Verbrauchseinrichtung 4 verbraucht werden soll. Dies kann überschüssige Leistung der Windparks 112, als auch überschüssige Leistung aus dem Versorgungsnetz 120 sein. Die Verbrauchseinrichtung 4 ist dafür über den Verbrauchsanschluss 26 an das Zwischennetz 10 angeschlossen. Der Verbrauchsanschluss 26 kann auch einen Teil des Zwischennetzes 10 bilden.

Die Verbrauchseinrichtung 4 ist hier mit verschiedenen Symbolen für verschiedene Ausgestaltungen gekennzeichnet. Dabei symbolisiert eine Chopper-Schaltung 28 eine reine Verbrauchseinheit, die elektrische Leistung bzw. elektrische Energie in Wärme umwandelt, was über entsprechend angesteuerte thermische Widerstände vorgenommen werden kann.

Außerdem ist eine Umwandlungseinrichtung 30 symbolisiert, die elektrische Leistung in ein anderes Medium, wie bspw. ein Gas, gewandelt werden kann. Vorzugsweise ist diese Umwandlungseinrichtung 30 so ausgestaltet, dass die Energie aus diesem anderen Medium, für das bspw. Gas genannt wurde, auch in elektrische Energie zurückgewandelt werden kann, zumindest teilweise. In diesem Fall würde eine solche Rückwandlung dazu führen, dass die Verbrauchseinrichtung 4 auch Leistung dem Zwischennetz 10 zur Verfügung stellen könnte und insoweit die Summenleistung $P_S$ zusätzlich zu den Parkleistungen $P_{P1}$ und $P_{P2}$ auch noch eine zurückgegebene Verbrauchsleistung aufweisen würde.

Schließlich ist in der Verbrauchseinrichtung 4 auch noch ein Speicher als Batteriespeicher 32 symbolisiert, der elektrische Energie direkt speichern kann.

Figur 3 veranschaulicht somit eine Windparkanordnung, die dazu vorbereitet ist, ein erfindungsgemäßes Verfahren zum Einspeisen elektrischer Leistung gemäß wenigstens einer beschriebenen Ausführungsform umzusetzen.

**Patentansprüche**

1. Verfahren zum Einspeisen elektrischer Leistung ($P_S$) in ein elektrisches Versorgungsnetz (120) mittels wenigstens eines ersten und eines zweiten Windparks (112), umfassend die Schritte

   - Bereitstellen einer ersten elektrischen Parkleistung ($P_{P1}$) durch den ersten Windpark (112) zum Einspeisen in das elektrische Versorgungsnetz (120),
   - Bereitstellen einer zweiten elektrischen Parkleistung ($P_{P2}$) durch den zweiten Windpark (112) zum Einspeisen in das elektrische Versorgungsnetz (120) und
   - Erzeugen einer Summenleistung ($P_S$) aus wenigstens der ersten und zweiten Parkleistung ($P_{P1}$, $P_{P2}$) und Einspeisen der Summenleistung ($P_S$) in das elektrische Versorgungsnetz (120), wobei
   - eine Zentralsteuereinheit (2) zum Steuern der eingespeisten Summenleistung das Bereitstellen der wenigstens ersten und zweiten Parkleistung ($P_{P1}$, $P_{P2}$) steuert, wobei
   - die Parkleistungen ($P_{P1}$; $P_{P2}$) und die Summenleistung Wirkleistungen sind,

   **dadurch gekennzeichnet, dass**
   die Zentralsteuereinheit (2) das Einspeisen in das elektrische Versorgungsnetz (120) in Abhängigkeit einer Netzsensitivität (NS) des Versorgungsnetzes (120) bezogen auf einen Einspeisepunkt (6) steuert, wobei
die Netzsensitivität NS in Abhängigkeit von einer Änderung einer eingespeisten Wirkleistung und einer daraus resultierenden Änderung einer Netzspannung des elektrischen Versorgungsnetzes definiert ist über die Formel:

$$NS = \Delta U / \Delta P$$

bei der $\Delta P$ die Änderung der eingespeisten Wirkleistung P und $\Delta U$ die resultierende Änderung der Netzspannung U bezeichnet, oder
die Netzsensitivität NS in Abhängigkeit von einer auf die Änderung einer eingespeisten Wirkleistung resultierenden Änderung einer Netzfrequenz des elektrischen Versorgungsnetzes definiert ist über die Formel

$$NS = \Delta f / \Delta P$$

bei der $\Delta P$ die Änderung der eingespeisten Wirkleistung P und $\Delta f$ die resultierende Änderung der Netzfrequenz f bezeichnet.

2. Verfahren nach Anspruch 1,
   **dadurch gekennzeichnet, dass**

   - der wenigstens erste und zweite Windpark (112) jeweils eine Parksteuereinheit (20) zum Steuern des jeweiligen Windparks (112) umfasst,
   - die Zentralsteuereinheit (2) mit diesen Parksteuereinheiten (20) verbunden ist und
   - die Zentralsteuereinheit (2) das Bereitstellen der ersten und zweiten Parkleistung ($P_{P1}$, $P_{P2}$) mittels der jeweiligen Parksteuereinheit (20) des wenigstens ersten und zweiten Windparks (112) steuert.

3. Verfahren nach Anspruch 1 oder 2,
   **dadurch gekennzeichnet, dass**
   die Zentralsteuereinheit (2)

   - Zustandsgrößen (U, f) des Versorgungsnetzes (120),
   - Werte der eingespeisten Summenleistung ($P_S$) und/oder
   - externe Vorgabewerte

   erfasst.

4. Verfahren nach einem der vorstehenden Ansprüche,
   **dadurch gekennzeichnet, dass**
   der wenigstens erste und zweite Windpark (112) ihre einzuspeisende Leistung ($P_{P1}$, $P_{P2}$) zum Bereitstellen auf ein Zwischennetz (10) einspeisen, wobei

- das Zwischennetz (10) jeweils über einen Transformator (8) mit dem jeweiligen Windpark (112) verbunden ist, zum Hochtransformieren einer elektrischen Spannung (U) im Windpark (112) auf eine höhere elektrische Spannung im Zwischennetz (10) und/oder
- das Zwischennetz (10) über einen Transformator (12) mit dem elektrischen Versorgungsnetz (120) verbunden ist, zum Hochtransformieren einer elektrischen Spannung im Zwischennetz (10) auf eine höhere elektrische Spannung (U) im Versorgungsetz (120).

5. Verfahren nach einem der vorstehenden Ansprüche, **dadurch gekennzeichnet, dass**
die Zentralsteuereinheit (2) das Einspeisen in das elektrische Versorgungsnetz (120)

- in Abhängigkeit eines Kurzschlussstromverhältnisses (SCR) steuert.

6. Verfahren nach einem der vorstehenden Ansprüche, **dadurch gekennzeichnet, dass**
die Zentralsteuerung (2) für das Einspeisen in das elektrische Versorgungsnetz (120)

- die Höhe der einzuspeisenden Wirkleistung (P) steuert,
- die Höhe der einzuspeisenden Blindleistung (Q) steuert und/oder
- das Verbrauchen elektrischer Leistung (P) in einer Verbrauchseinrichtung (4), insbesondere in einer Verlustwiderstandseinrichtung (4) steuert.

7. Verfahren nach einem der vorstehenden Ansprüche, **dadurch gekennzeichnet, dass**

- die Zentralsteuereinheit (2) aktuelle Zustandsgrößen (U, f) im elektrischen Versorgungsnetz (120) erfasst, insbesondere Frequenz (f) und Spannungsamplitude (U), und davon abhängig das Bereitstellen wenigstens der ersten und zweiten Parkleistung ($P_{P1}$, $P_{P2}$) steuert und/oder
- jede Parksteuereinheit (20) Informationen über wenigstens eine Zustandsgröße (U, f) des jeweiligen Windparks (112) bereitstellt und die Informationen enthalten wenigstens eine der Information aus der Liste umfassend,
- die aktuell verfügbare Leistung ($P_{P1}$, $P_{P2}$),
- die innerhalb eines vorbestimmten Vorhersagezeitraums zu erwartende verfügbare Leistung (P) und
- zu erwartende Änderungen der verfügbaren Leistung (P).

8. Verfahren nach einem der vorstehenden Ansprüche, **dadurch gekennzeichnet, dass**

- die Zentralsteuereinheit (2) als Phasenschieber arbeitet und/oder
- das Einspeisen ins Netz (120) so ausführt, dass Störungen im Versorgungsnetz (120) ganz oder teilweise kompensiert werden.

9. Windparkanordnung (1) zum Einspeisen elektrischer Leistung ($P_S$) in ein elektrisches Versorgungsnetz (120) umfassend,

- wenigstens einen ersten und einen zweiten jeweils mehrere Windenergieanlagen (100) umfassenden Windpark (112),
- ein mit den Windparks (112) verbundenes elektrisches Zwischennetz (10) zum Weiterleiten elektrischer, von den verbundenen Windparks (112) bereitgestellter Parkleistung ($P_{P1}$, $P_{P2}$) und
- eine Zentralsteuereinheit (2) zum Steuern des Einspeisens einer wenigstens teilweise aus den Parkleistungen ($P_{P1}$, $P_{P2}$) erzeugten Summenleistung ($P_S$) und zum Steuern der einzelnen, von den verbundenen Windparks (112) bereitgestellten Parkleistungen ($P_{P1}$, $P_{P2}$), wobei

die Windparkanordnung (1) konfiguriert ist zum Durchführen eines Verfahrens nach einem der Ansprüche 1 bis 8.

10. Windparkanordnung nach Anspruch 9, **dadurch gekennzeichnet, dass**

- das Zwischennetz (10) jeweils über einen Transformator (8) mit dem jeweiligen Windpark (112) verbunden ist, zum Hochtransformieren einer elektrischen Spannung im Windpark (112) auf eine höhere elektrische Spannung im Zwischennetz (10) und/oder
- das Zwischennetz (10) über einen Transformator (12) mit dem elektrischen Versorgungsnetz (120) verbunden ist, zum Hochtransformieren einer elektrischen Spannung im Zwischennetz (10) auf eine höhere elektrische Spannung (U) im Versorgungsetz (120).

**Claims**

1. A method for feeding electrical power ($P_S$) into an electrical supply network (120) by means of at least a first and a second wind farm (112), comprising the steps:

- Provision of a first electrical wind farm output ($P_{P1}$) by the first wind farm (112) for feeding into the electrical supply network (120),
- Provision of a second electrical wind farm output ($P_{P2}$) by the second wind farm (112) for feeding into the electrical supply network (120),
- Generation of a total power output ($P_S$) from at least the first and second wind farm output ($P_{P1}$, $P_{P2}$) and feeding in of the total power output ($P_S$) into the electrical supply network (120), wherein
- a central control unit (2) for controlling the total power fed in controls the provision of at least the first and second wind farm output ($P_{P1}$, $P_{P2}$), wherein
- the wind farm output ($P_{P1}$, $P_{P2}$) and the total power output are active power,

**characterized in that**
the central control unit (2) controls the feed into the electrical supply network (120) as a function of a grid sensitivity (NS) of the supply network (120) with reference to a feed point (6), wherein
the grid sensitivity NS is defined in dependence of a change in a fed-in active power and a resulting change in a line voltage of the electrical supply network using the formula:

$$NS = \Delta U / \Delta P$$

where $\Delta P$ describes the change in the fed-in active power P and $\Delta U$ describes the resulting change in the line voltage U, or
the grid sensitivity NS is defined in dependence of a change in a grid frequency of the electrical supply network resulting from a change in an fed-in active power using the formula

$$NS = \Delta f / \Delta P$$

where $\Delta P$ describes the change in the fed-in active power P and $\Delta f$ describes the resulting change of the grid frequency f.

2. Method according to Claim 1,
**characterized in that**

- at least the first and second wind farm (112) each comprise a wind farm control unit (20) for controlling the respective wind farm (112),
- the central control unit (2) is connected to these wind farm control units (20) and
- the central control unit (2) controls the provision of the first and second wind farm output ($P_{P1}$, $P_{P2}$) by means of the respective wind farm control unit (20) of at least the first and second wind farm (112).

3. Method according to Claim 1 or 2,
**characterized in that**
the central control unit (2) records

- status variables (U, f) for the supply network (120),
- values for the total power output ($P_S$) fed in and/or
- external default values.

4. The method according to one of the above claims,
**characterized in that**
at least the first and second wind farm (112) feed the power ($P_{P1}$, $P_{P2}$) thereof to be fed in for provision into an intermediate network (10), wherein

- in each case, the intermediate network (10) is connected to the respective wind farm (112) by means of a transformer (8) to step up an electrical voltage (U) in the wind farm (112) to a higher electrical voltage in the intermediate network (10) and/or
- the intermediate network (10) is connected to the electrical supply network (120) by means of a transformer (12) to step up an electrical voltage in the intermediate network (10) to a higher electrical voltage (U) in the supply network (120).

5. Method according to one of the above claims,
**characterized in that**
the central control unit (2) controls the feed into the electrical supply network (120)

- as a function of a short-circuit ratio (SCR).

6. Method according to one of the above claims,
**characterized in that**
the central control unit (2) for the feed into the electrical supply network (120) controls

- the amount of active power (P) to be fed in,
- the amount of reactive power (Q) to be fed in, and/or
- the consumption of electrical power (P) in a power consumption device (4), in particular in a loss resistance device (4).

7. The method according to one of the above claims,
**characterized in that**

- the central control unit (2) records current status variables (U, f) in the electrical supply network (120), in particular frequency (f) and voltage amplitude (U), and, as a function thereof, controls the provision of at least the first and second wind farm output ($P_{P1}$, $P_{P2}$) and/or
- each wind farm control unit (20) provides information concerning at least one status variable (U, f) for the respective wind farm (112) and the information contains at least one piece of information from the list comprising:
- the currently available power ($P_{P1}$, $P_{P2}$),
- the power (P) expected to be available within a predetermined forecast period and
- changes expected in the available power (P).

8. The method according to one of the above claims, **characterized in that**

- the central control unit (2) functions as a phase shifter and/or
- power is fed into the grid (120) in such a way that disturbances in the supply network (120) are entirely or partially compensated for.

9. Wind farm arrangement (1) for feeding electrical power ($P_S$) into an electrical supply network (120) comprising:

- at least a first and a second wind farm (112) in each case comprising a plurality of wind energy installations (100),
- an intermediate electrical grid (10) that is connected to the wind farms (112), which intermediate network transmits electrical wind farm output ($P_{P1}$, $P_{P2}$) provided by the connected wind farms (112) and
- a central control unit (2) for controlling the feeding in a total power output ($P_S$) that is at least partially generated from the wind farm outputs ($P_{P1}$, $P_{P2}$) and for controlling the individual wind farm outputs ($P_{P1}$, $P_{P2}$) provided by the connected wind farms (112), wherein

the wind farm arrangement (1) is configured to perform a method according to one of the Claims 1 to 8.

10. The wind farm arrangement according to Claim 9, **characterized in that**

- in each case, the intermediate network (10) is connected to the respective wind farm (112) by means of a transformer (8) to step up an electrical voltage in the wind farm (112) to a higher electrical voltage in the intermediate network (10) and/or
- the intermediate network (10) is connected to the electrical supply network (120) by means of a transformer (12) to step up an electrical voltage in the intermediate network (10) to a higher electrical voltage (U) in the supply network (120).

**Revendications**

1. Procédé d'injection d'une puissance électrique ($P_s$) dans un réseau de distribution électrique (120) au moyen d'au moins un premier et un second parc éolien (112), comportant les étapes

- de fourniture d'une première puissance électrique de parc ($P_{P1}$) par le premier parc éolien (112) pour l'injection dans le réseau de distribution électrique (120),
- de fourniture d'une seconde puissance électrique de parc ($P_{P2}$) par le second parc éolien (112) pour l'injection dans le réseau de distribution électrique (120) et
- de génération d'une puissance cumulée ($P_s$) à partir d'au moins les première et seconde puissances électriques de parc ($P_{P1}$, $P_{P2}$) et l'injection de la puissance cumulée ($P_s$) dans le réseau de distribution électrique (120), dans lequel
- une unité de commande centrale (2) pour la commande de la puissance cumulée injectée commande la fourniture des au moins première et seconde puissances électriques de parc ($P_{P1}$, $P_{P2}$), dans lequel
- les puissances électriques de parc ($P_{P1}$ ; $P_{P2}$) et la puissance cumulée sont des puissances actives,

**caractérisé en ce que**
l'unité de commande centrale (2) commande l'injection dans le réseau de distribution électrique (120) en fonction d'une sensibilité de réseau (NS) du réseau de distribution électrique (120) en référence à un point d'injection (6), dans lequel
la sensibilité de réseau NS est définie, en fonction d'une variation d'une puissance active injectée et d'une variation en résultant d'une tension de réseau du réseau de distribution électrique, par la formule :

$$NS = \Delta U/\Delta P$$

où $\Delta P$ désigne la variation de la puissance active injectée P et $\Delta U$ la variation résultante de la tension de réseau U, ou
la sensibilité de réseau NS est définie, en fonction d'une variation d'une fréquence de réseau du réseau de distribution électrique, résultante de la variation d'une puissance active injectée, par la formule

$$NS = \Delta f/\Delta P$$

où $\Delta P$ désigne la variation de la puissance active injectée P et $\Delta f$ la variation résultante de la fréquence de réseau f.

**2.** Procédé selon la revendication 1,
**caractérisé en ce que**

- les au moins premier et second parcs éoliens (112) comportent respectivement une unité de commande de parc (20) pour la commande du parc éolien concerné (112),
- l'unité de commande centrale (2) est reliée auxdites unités de commande de parc (20) et
- l'unité de commande centrale (2) commande la fourniture des première et seconde puissances électriques de parc ($P_{P1}$, $P_{P2}$) au moyen de l'unité de commande de parc concernée (20) des au moins premier et second parcs éoliens (112).

**3.** Procédé selon la revendication 1 ou 2,
**caractérisé en ce que**
l'unité de commande centrale (2) recueille

- des grandeurs d'état (U, f) du réseau de distribution électrique (120),
- des valeurs de la puissance cumulée injectée ($P_s$) et/ou
- des valeurs de consigne externes.

**4.** Procédé selon l'une quelconque des revendications précédentes,
**caractérisé en ce que**
les au moins premier et second parcs éoliens (112) injectent leur puissance à injecter ($P_{P1}$, $P_{P2}$) pour la fourniture dans un réseau intermédiaire (10), dans lequel

- le réseau intermédiaire (10) est relié respectivement par le biais d'un transformateur (8) au parc éolien concerné (112) pour l'élévation par transformateur d'une tension électrique (U) dans le parc éolien (112) à une tension électrique plus élevée dans le réseau intermédiaire (10) et/ou
- le réseau intermédiaire (10) est relié par le biais d'un transformateur (12) au réseau de distribution électrique (120) pour l'élévation par transformateur d'une tension électrique dans le réseau intermédiaire (10) à une tension électrique plus élevée (U) dans le réseau de distribution (120).

**5.** Procédé selon l'une quelconque des revendications précédentes,
**caractérisé en ce que**
l'unité de commande centrale (2) commande l'injection dans le réseau de distribution électrique (120)

- en fonction d'un rapport de court-circuit (SCR).

**6.** Procédé selon l'une quelconque des revendications précédentes,
**caractérisé en ce que**,
pour l'injection dans le réseau de distribution électrique (120), la commande centrale (2)

- commande le montant de la puissance active à injecter (P),
- commande le montant de la puissance réactive à injecter (Q) et/ou
- commande la consommation de puissance électrique (P) dans un dispositif consommateur (4), en particulier dans un dispositif à résistance ohmique (4).

**7.** Procédé selon l'une quelconque des revendications précédentes,
**caractérisé en ce que**

- l'unité de commande centrale (2) recueille des grandeurs d'état actuelles (U, f) dans le réseau de distribution électrique (120), en particulier une fréquence (f) et une amplitude de tension (U), et commande, en fonction de celles-ci, la fourniture d'au moins les première et seconde puissances électriques de parc ($P_{P1}$, $P_{P2}$) et/ou
- chaque unité de commande de parc (20) fournit des informations liées à au moins une grandeur d'état (U, f) du parc éolien concerné (112) et les informations contiennent au moins une des informations de la liste comportant,
- la puissance actuellement disponible ($P_{P1}$, $P_{P2}$),
- la puissance (P) disponible attendue au cours d'une période de temps de prévision prédéfinie (P) et
- des variations attendues de la puissance disponible (P).

**8.** Procédé selon l'une quelconque des revendications précédentes,
**caractérisé en ce que**

- l'unité de commande centrale (2) fonctionne en tant que déphaseur et/ou
- l'injection dans le réseau (120) est exécutée de sorte que des perturbations sont compensées intégralement ou partiellement dans le réseau de distribution électrique (120).

**9.** Agencement de parc éolien (1) pour l'injection d'une puissance électrique (Ps) dans un réseau de distribution électrique (120) comportant,

- au moins un premier et un second parc éolien (112) comportant respectivement plusieurs éoliennes (100),
- un réseau intermédiaire électrique (10) relié aux parcs éoliens (112) pour le transfert d'une puissance électrique de parc (P$_{P1}$, P$_{P2}$) fournie par les parcs éoliens reliés (112) et

- une unité de commande centrale (2) pour la commande de l'injection d'une puissance cumulée (Ps) générée au moins en partie à partir des puissances de parc (P$_{P1}$, P$_{P2}$) et pour la commande des puissances de parc (P$_{P1}$, P$_{P2}$) individuelles fournies par les parcs éoliens reliés (112), dans lequel

l'agencement de parc éolien (1) est configuré pour l'exécution d'un procédé selon l'une quelconque des revendications 1 à 8.

10. Agencement de parc éolien selon la revendication 9, **caractérisé en ce que**

- le réseau intermédiaire (10) est relié respectivement par le biais d'un transformateur (8) au parc éolien concerné (112) pour l'élévation par transformateur d'une tension électrique dans le parc éolien (112) à une tension électrique plus élevée dans le réseau intermédiaire (10) et/ou
- le réseau intermédiaire (10) est relié par le biais d'un transformateur (12) au réseau de distribution électrique (120) pour l'élévation par transformateur d'une tension électrique dans le réseau intermédiaire (10) à une tension électrique plus élevée (U) dans le réseau de distribution (120).

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7638893 B
- US 20120101643 A1
- US 20100025994 A1